# EUROPEAN PATENT APPLICATION

(11) **EP 4 836 391 A1**
(43) Date of publication of application: **04.11.2026**
(21) Application number: 25207642.7
(22) Date of filing: 09.10.2025
(51) Int. Cl.: H04N 1/00, H04N 1/047, G06V 10/25, G06V 30/412, G06V 30/41, G06V 30/14

(54) **INFORMATION PROCESSING SYSTEM, PROGRAM, AND INFORMATION PROCESSING METHOD FOR HANDLING OVERLAPING DOCUMENTS DURING SCANNING**

(30) Priority: 30.04.2025 JP 2025075379
(71) Applicant: FUJIFILM Business Innovation Corp., Minato-ku Tokyo (JP)
(72) Inventor: WATANABE, Satoshi, Yokohama-shi, Kanagawa (JP)
(74) Representative: Becker Kurig & Partner Patentanwälte mbB

(57) **Abstract**

An information processing system includes a processor configured to determine that, in a case where an overlap of documents is detected in a non-detection region that is set in advance as a region where the overlap of the documents is not detected in an image acquired by scanning the documents, the overlap of the documents does not occur for the image.

## Description

### BACKGROUND OF THE INVENTION

### (i) Field of the Invention

The present disclosure relates to an information processing system, a program, and an information processing method.

### (ii) Description of Related Art

JP2020-198547A discloses an image processing apparatus that can prompt a user to perform re-scanning before registration in a situation in which re-scanning is required for a scanned image.

JP2020-108094A discloses a document reading apparatus that can suppress time and cost required for detecting the double feeding of a document and can appropriately determine the double feeding of the document.

### SUMMARY OF THE INVENTION

In an information processing system such as a scanning apparatus, a system has been proposed that stops a scanning operation in a case where overlap of a plurality of documents is detected, as an abnormal document.

In such a system, for example, in a case where it is appropriate to scan a plurality of documents, such as a ledger to which a receipt is attached, which are overlapped, as a normal document, there is a problem that scanning cannot be performed.

According to an aspect of the present disclosure, there are provided an information processing system, a program, and an information processing method that can perform scanning a normal document in which a plurality of documents are overlapped in an information processing system that detects an overlap of documents during scanning.

According to a first aspect of the present invention, there is provided an information processing system including a processor configured to: determine that, in a case where an overlap of documents is detected in a non-detection region that is set in advance as a region where the overlap of the documents is not detected in an image acquired by scanning the documents, the overlap of the documents does not occur for the image.

According to a second aspect of the present invention, there is provided the information processing system according to the first aspect, in which the processor may be configured to: determine that the overlap of the documents does not occur in a case where an overlap portion of the documents extends beyond the non-detection region in a same width in one direction.

According to a third aspect of the present invention, there is provided the information processing system according to the second aspect, in which the processor may be configured to: determine that the overlap of the documents does not occur in a case where the overlap portion of the documents extends beyond the non-detection region in the same width in a sub-scanning direction of a scanning device.

According to a fourth aspect of the present invention, there is provided the information processing system according to any one of the first to third aspects, in which the processor may be configured to: store non-detection region information that includes information on the non-detection region designated by a user for the image, and set the non-detection region in the image acquired by scanning the documents with reference to non-detection region information selected by the user in a case of scanning the documents from the stored non-detection region information.

According to a fifth aspect of the present invention, there is provided the information processing system according to the fourth aspect, in which the non-detection region information may include the information on the non-detection region designated by the user for an image of a predetermined paper size.

According to a sixth aspect of the present invention, there is provided the information processing system according to the fourth aspect, in which the non-detection region information may include the information on the non-detection region designated by the user for the image acquired by scanning the documents in advance.

According to a seventh aspect of the present invention, there is provided a program causing a computer to execute: determining that, in a case where an overlap of documents is detected in a non-detection region that is set in advance as a region where the overlap of the documents is not detected in an image acquired by scanning the documents, the overlap of the documents does not occur for the image.

According to an eighth aspect of the present invention, there is provided an information processing method including: determining that, in a case where an overlap of documents is detected in a non-detection region that is set in advance as a region where the overlap of the documents is not detected in an image acquired by scanning the documents, the overlap of the documents does not occur for the image.

According to the information processing system of the first aspect of the present invention, in the information processing system that detects the overlap of the documents during scanning, it is possible to scan the normal document in which the plurality of documents are overlapped.

According to the information processing system of the second aspect of the present invention, scanning can be performed as a normal document even in a case where the document extends beyond the non-detection region.

According to the information processing system of the third aspect of the present invention, even in a case where the document extends beyond the non-detection region, scanning can be performed as the normal document in a case of the document that goes out in the sub-scanning direction that is more likely to be a normal document than the document that goes out in another direction.

According to the information processing system of the fourth aspect of the present invention, the user can set the non-detection region with respect to the image acquired by scanning the document.

According to the information processing system of the fifth aspect of the present invention, it is possible to simplify the setting of the non-detection region, as compared with a case where the non-detection region is set for each document prepared by the user.

According to the information processing system of the sixth aspect of the present invention, it is possible to set the non-detection region appropriate for the document prepared by the user.

According to the program of the seventh aspect of the present invention, in the information processing system that detects the overlap of the documents during scanning, it is possible to scan the normal document in which the plurality of documents are overlapped.

According to the information processing method of the eighth aspect of the present invention, in the information processing system that detects the overlap of the documents during scanning, it is possible to scan the normal document in which the plurality of documents are overlapped.

### BRIEF DESCRIPTION OF THE DRAWINGS

Exemplary embodiment(s) of the present invention will be described in detail based on the following figures, wherein:
FIG. 1 is an external view of an image forming apparatus of one exemplary embodiment of the present disclosure;
FIG. 2 is a block diagram showing a hardware configuration of the image forming apparatus;
FIG. 3 is a diagram showing an example of a normal document in which a plurality of documents overlap each other;
FIG. 4 is a diagram showing an example of a document having a receipt attachment region;
FIG. 5 is a diagram showing a state in which a non-detection region is set in the document shown in FIG. 4;
FIG. 6 is a diagram showing an example of an abnormal document in which a plurality of documents overlap each other;
FIG. 7 is a diagram showing an example of an abnormal document in a state in which an overlapping document extends beyond a non-detection region;
FIG. 8 is a diagram showing an example of a document having a receipt attachment region;
FIG. 9 is a diagram showing an example of a normal document in a state in which an overlapping document extends beyond a non-detection region;
FIG. 10 is a diagram for describing a flow of setting of non-detection region information;
FIG. 11 is a diagram for describing a flow of setting of the non-detection region information;
FIG. 12 is a diagram for describing a flow of setting of the non-detection region information; and
FIG. 13 is a flowchart for describing a flow of processing in a case where a document is scanned by a scanner in the image forming apparatus.

### DETAILED DESCRIPTION OF THE INVENTION

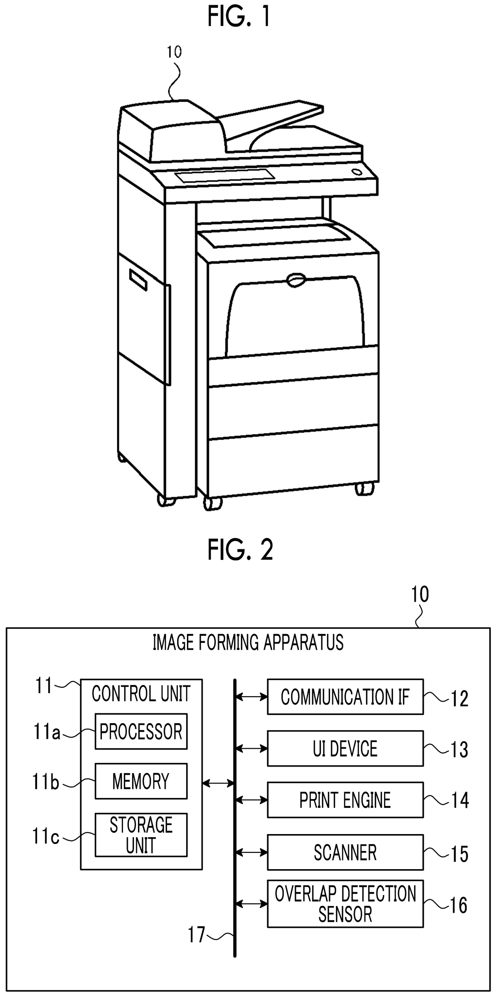

Hereinafter, an exemplary embodiment for embodying the technique of the present disclosure will be described in detail with reference to the drawings. FIG. 1 is an external view of an image forming apparatus according to an exemplary embodiment.

The image forming apparatus 10 shown in FIG. 1 is a so-called multifunctional apparatus including a plurality of functions such as a copy function, a print function, a fax function, and a scan function. The image forming apparatus 10 is an example of an information processing system in the technology of the present disclosure.

Next, a hardware configuration of the image forming apparatus 10 according to the present exemplary embodiment will be described. FIG. 2 is a block diagram illustrating the hardware configuration of the image forming apparatus 10.

As shown in FIG. 2, the image forming apparatus 10 includes a control unit 11, a communication interface (abbreviated as communication IF) 12, a user interface device (abbreviated as UI device) 13, a print engine 14, a scanner 15, and an overlap detection sensor 16. These components are connected to each other via a control bus 17.

The control unit 11 includes a processor 11a, a memory 11b, and a storage unit 11c. The processor 11a executes predetermined processing based on a program read out from the storage unit 11c and developed in the memory 11b. The storage unit 11c is configured with, for example, a ROM, an HDD, or an SSD. Various programs, data, and the like are stored in the storage unit 11c.

In the present exemplary embodiment, the processor 11a is described as reading out and executing the program stored in the storage unit 11c, but the present disclosure is not limited thereto. The program may be provided in a form recorded on a recording medium readable by a computer as described above. In addition, the program may be acquired from an external apparatus via a communication line.

The communication IF 12 transmits and receives data to and from an external device or the like. The UI device 13 is, for example, a device for the user to receive or input information, such as a touch panel and/or a button. The print engine 14 prints an image on a recording medium such as printing paper through steps such as charging, exposure, development, transfer, and fixing.

The scanner 15 scans a document loaded into the image forming apparatus 10 and outputs the document as image data in a set image format. The scanner 15 is an example of a scanning device in the technology of the present disclosure.

The overlap detection sensor 16 is a sensor that detects that a plurality of documents are scanned in a state of overlapping with each other in the scanner 15. The overlap detection sensor 16 may be, for example, an ultrasonic sensor, but any sensor may be used as long as the sensor can detect the overlap of the documents.

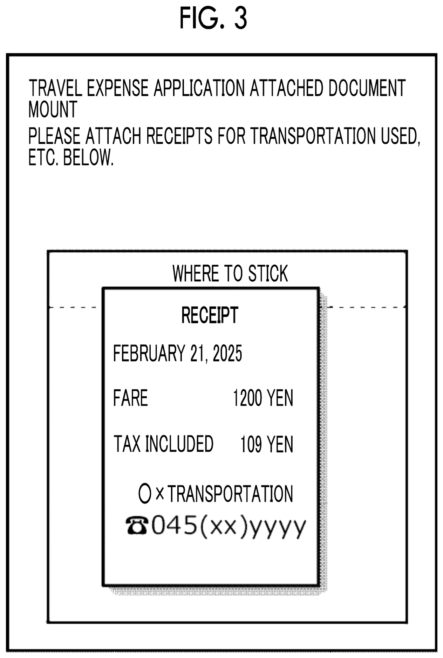

In the image forming apparatus, it is proposed to stop a scanning operation in a case where the overlap of the plurality of documents is detected, as an abnormal document. In this case, for example, in a case where it is appropriate to scan a plurality of documents, such as a ledger to which a receipt is attached, which are overlapped, as a normal document as shown in FIG. 3, there is a problem that scanning cannot be performed. Therefore, there is a demand for an image forming apparatus that can stop scanning with respect to an abnormal document in which a plurality of documents overlap each other and can perform scanning with respect to a normal document in which a plurality of documents overlap each other.

In order to meet such a demand, in a case where the overlap of the documents is detected in a non-detection region that is set in advance as a region where the overlap of the documents is not detected in an image acquired by scanning documents, the control unit 11 of the image forming apparatus 10 according to the present exemplary embodiment determines that the overlap of the documents does not occur for the image.

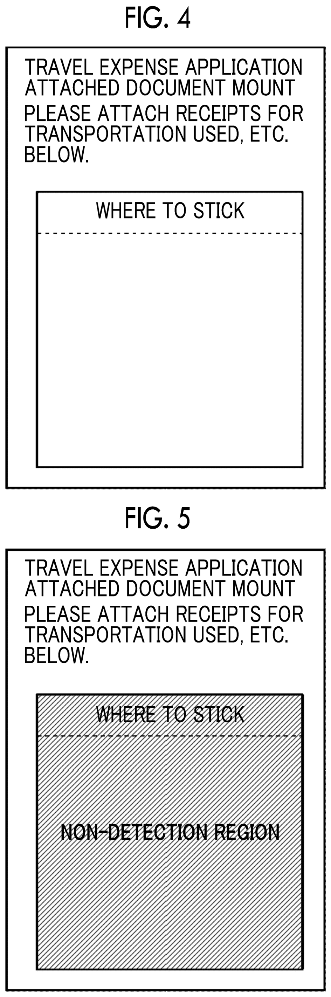

Specifically, in a case of the ledger shown in FIG. 4, a receipt attachment region is set in advance as a region where the overlap of the documents is not detected, as shown in FIG. 5. Then, as shown in FIG. 3, in a case where the overlap of the documents is detected in the non-detection region, the control unit 11 determines that the overlap of the documents does not occur for the image.

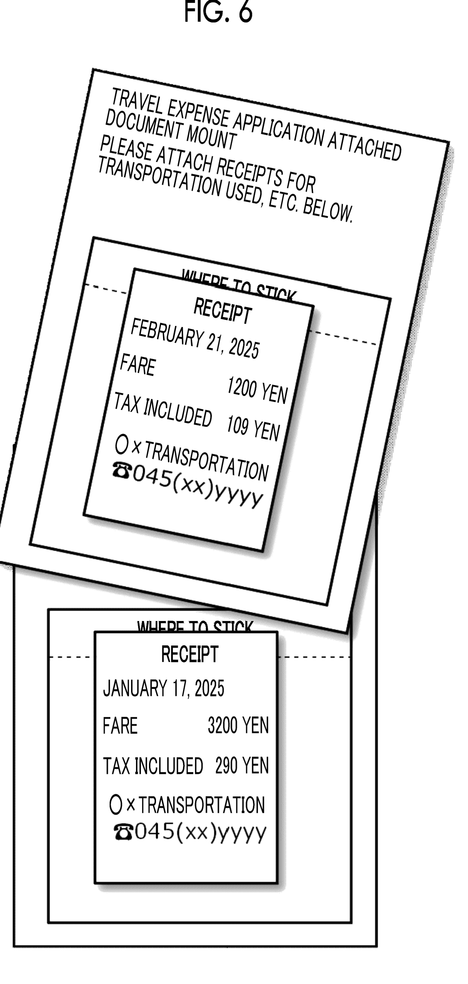

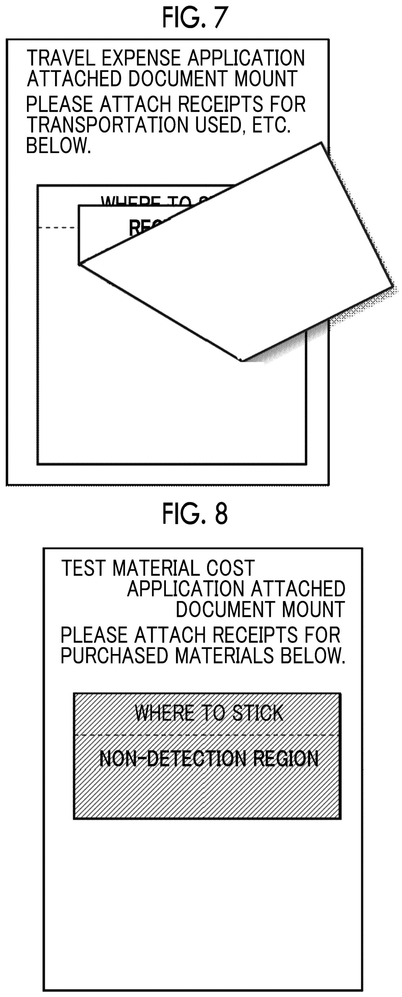

In such an aspect, for example, in a case where a plurality of documents overlap in an abnormal form as shown in FIG. 6, and in a case where a receipt is turned over and extends beyond the non-detection region as shown in FIG. 7, the control unit 11 can determine the abnormal overlap of documents and stop the scanning.

In the present exemplary embodiment, in a case where the overlap portion of the documents extends beyond the non-detection region in the same width in one direction, the control unit 11 may determine that the overlap of the documents does not occur.

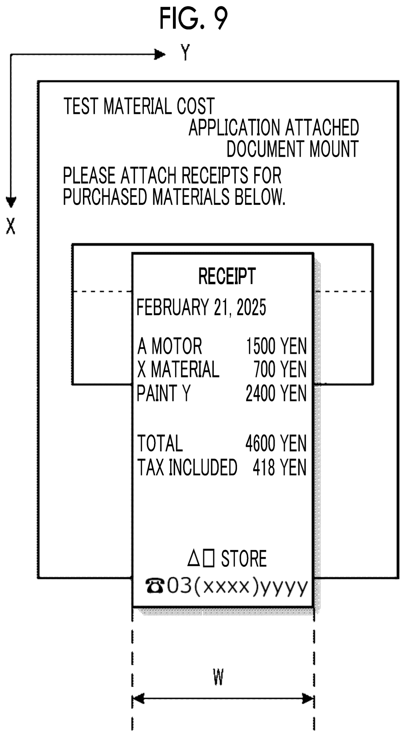

Specifically, even in a case where the non-detection region is small as in the ledger shown in FIG. 8 and a receipt extends beyond the non-detection region as illustrated in FIG. 9, in a case where the overlap portion of the documents goes out in the same width W from the non-detection region in one direction, the control unit 11 determines that the overlap of the documents does not occur for the image.

In a case where the overlap portion of the documents goes out in the same width W from the non-detection region in the sub-scanning direction of the scanner 15, the control unit 11 may determine that the overlap of the documents does not occur.

A direction in which the one-dimensional line sensor included in the scanner 15 extends is referred to as a main scanning direction, and a direction in which the document is relatively moved with respect to the one-dimensional line sensor is referred to as a sub-scanning direction. In the example shown in FIG. 9, a Y-axis direction is the main scanning direction, and an X-axis direction is the sub-scanning direction.

In addition, the control unit 11 may store non-detection region information that includes information on a non-detection region designated by the user for the image in the storage unit 11c, and set the non-detection region in the image acquired by scanning the documents with reference to the non-detection region information selected by the user during the scanning of the documents from the stored non-detection region information.

In this case, the non-detection region information may include the information on the non-detection region designated by the user for an image of a predetermined paper size.

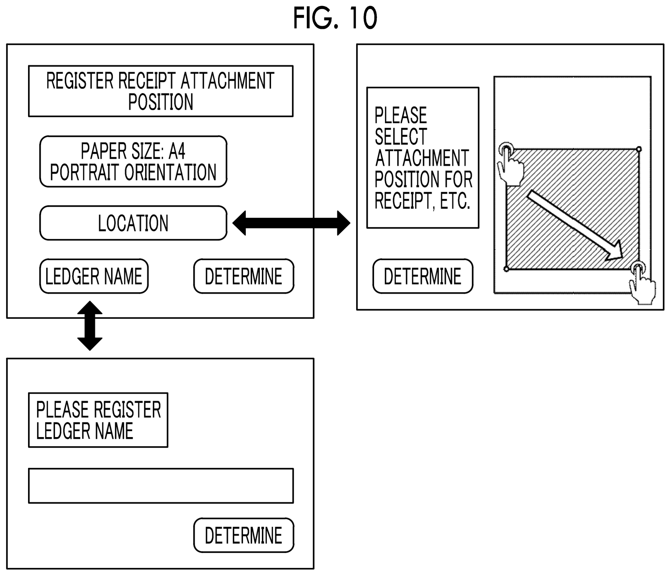

Specifically, as shown in FIG. 10, the control unit 11 displays a setting screen of the non-detection region information on the touch panel, and causes the user to input the paper size and the non-detection region in the paper size. Then, the control unit 11 stores the input non-detection region information together with a name. In such an aspect, the user can set an appropriate non-detection region by selecting the non-detection region information having an appropriate name from the stored non-detection region information.

In addition, the non-detection region information may include the information on the non-detection region designated by the user for the image acquired by scanning the documents in advance.

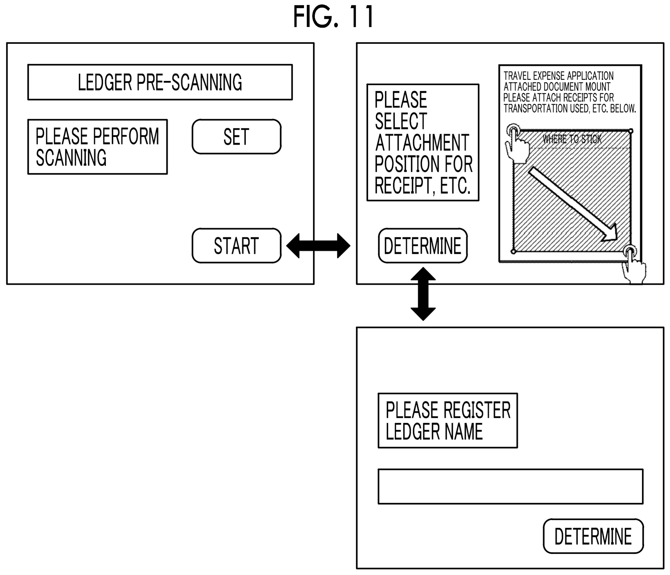

Specifically, as shown in FIG. 11, the control unit 11 displays a setting screen of the non-detection region information on the touch panel, and causes the user to scan an appropriate document. Here, it is assumed that the document shown in FIG. 4 is scanned. In addition, the control unit 11 causes the user to input the non-detection region in an image of the document scanned by the user. Then, the control unit 11 stores the input non-detection region information together with a name. In such an aspect, the user can set an appropriate non-detection region with respect to any document by selecting the non-detection region information having an appropriate name from the stored non-detection region information.

In this case, the control unit 11 may assist the setting of the non-detection region by an optical character recognition process.

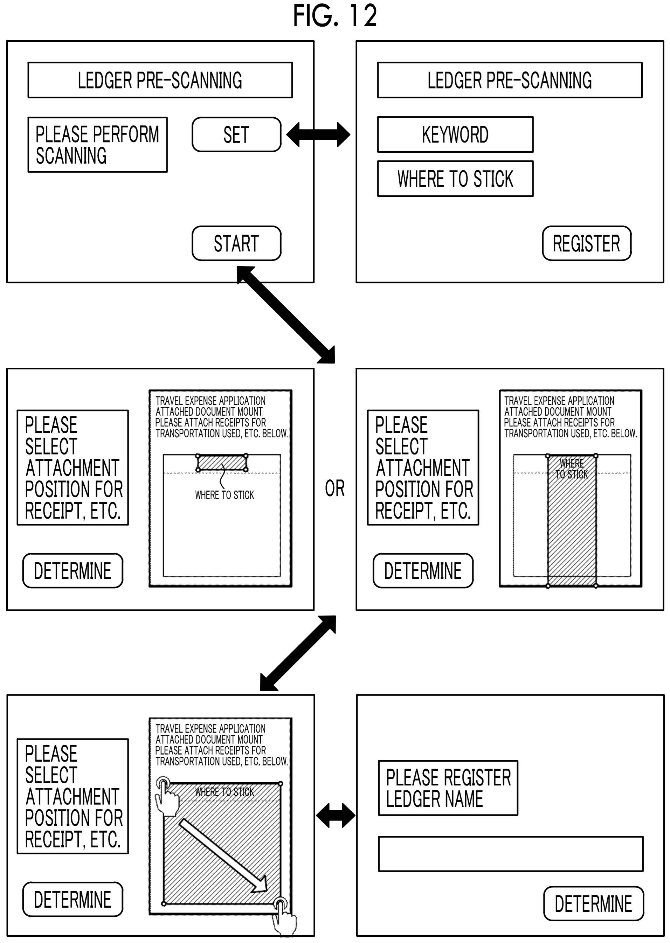

Specifically, as shown in FIG. 12, the control unit 11 displays a setting screen of the non-detection region information on the touch panel and causes the user to scan an appropriate document. Here, it is assumed that the document shown in FIG. 4 is scanned. In addition, the control unit 11 causes the user to input a keyword for setting the non-detection region. The control unit 11 displays a peripheral region of the input keyword or a region extending from the peripheral region of the keyword in the sub-scanning direction as a candidate region of the non-detection region. In addition, the control unit 11 receives a change in the shape of the region from the user for the displayed candidate region of the non-detection region. Then, the control unit 11 stores the finally determined non-detection region information together with the name. In such an aspect, it is possible to reduce the burden on the user in a case where the user sets the non-detection region.

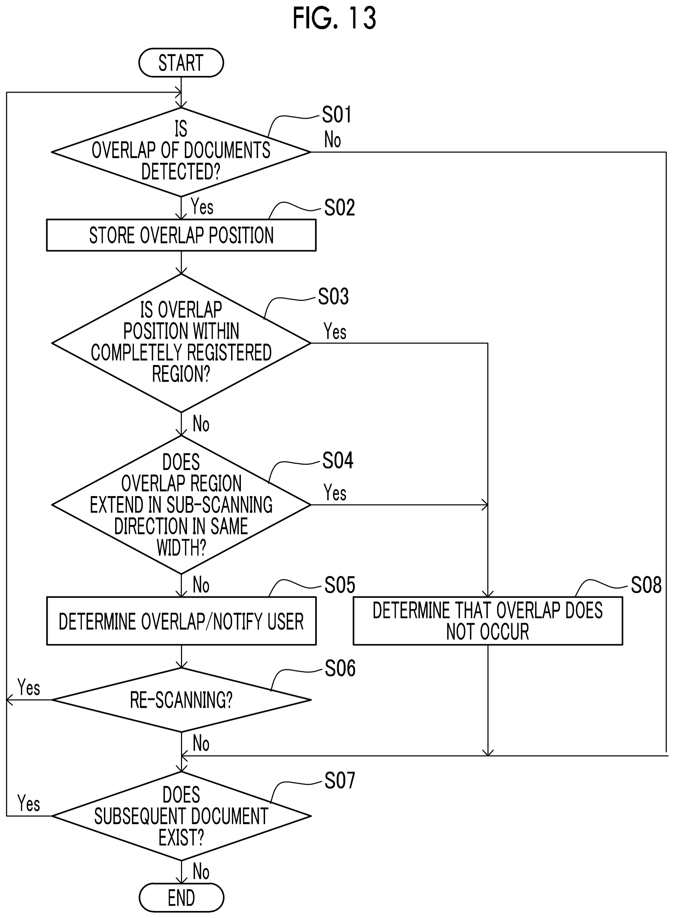

Hereinafter, in the image forming apparatus 10 according to the present exemplary embodiment, an example of a flow of a process in a case where the scanner 15 scans the document will be described in detail with reference to a flowchart of FIG. 13.

As shown in FIG. 13, in a case where the scanning is started, first, the control unit 11 detects the overlap of the documents and determines whether or not the overlap of the documents is detected in step S01.

In a case where it is determined that the overlap of the documents is not detected in step S01, the control unit 11 transitions to step S07.

In a case where it is determined that the overlap of the documents is detected in step S01, the control unit 11 stores a document overlap position in step S02.

Next, the control unit 11 determines whether or not the document overlap position is within the non-detection region that is completely registered in step S03.

In a case where it is determined that the document overlap position is within the non-detection region that is completely registered in step S03, the control unit 11 determines that the overlap of the documents does not occur in the scanned image in step S08, and transitions to step S07.

In a case where it is determined that the document overlap position is not within the non-detection region in which the document overlap position is completely registered in step S03, the control unit 11 determines whether or not a document overlap region extends in the sub-scanning direction in the same width in step S04.

In a case where it is determined that the document overlap region extends in the sub-scanning direction in the same width in step S04, the control unit 11 determines that the overlap of the documents does not occur in the scanned image in step S08, and transitions to step S07.

In a case where it is determined that the document overlap region does not extend in the sub-scanning direction in the same width in step S04, the control unit 11 determines that the overlap of the documents occurs in the scanned image in step S05, and notifies the user.

Next, the control unit 11 inquires of the user whether or not to execute re-scanning for the scan in which the overlap of the documents is detected, and determines whether or not an instruction to execute re-scanning is input in step S06.

In a case where it is determined that the instruction to execute the re-scanning is input in step S06, the control unit 11 transitions to step S01.

In a case in which it is determined that an instruction to not execute the re-scanning is input in step S06, the control unit 11 determines whether or not there is a subsequent document in step S07.

In a case where it is determined that a subsequent document is present in step S07, the control unit 11 transitions to step S01.

In a case where it is determined that the subsequent document does not present in step S07, the control unit 11 ends the process.

### [Modification Example]

The information processing system according to an exemplary embodiment of the present disclosure has been described above. However, the technology of the present disclosure is not limited to the above-described exemplary embodiment and may be changed as appropriate.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

In the exemplary embodiments above, the term "processor" is broad enough to encompass one processor or plural processors in collaboration which are located physically apart from each other but may work cooperatively. The order of operations of the processor is not limited to one described in the exemplary embodiments above, and may be changed.

In addition, in the technology of the present disclosure, the system includes both a system configured with a plurality of devices and a system configured with a single device.

In addition, the technology of the present disclosure can also be applied to a program and a program product.

### [Supplementary Note]

Regarding the exemplary embodiment described above, the following supplementary notes are further disclosed.
(((1))) An information processing system comprising:
   a processor configured to:
   determine that, in a case where an overlap of documents is detected in a non-detection region that is set in advance as a region where the overlap of the documents is not detected in an image acquired by scanning the documents, the overlap of the documents does not occur for the image.
(((2))) The information processing system according to (((1))), wherein the processor is configured to:
   determine that the overlap of the documents does not occur in a case where an overlap portion of the documents extends beyond the non-detection region in a same width in one direction.
(((3))) The information processing system according to (((2))), wherein the processor is configured to:
   determine that the overlap of the documents does not occur in a case where the overlap portion of the documents extends beyond the non-detection region in the same width in a sub-scanning direction of a scanning device.
(((4))) The information processing system according to any one of (((1))) to ((3))), wherein the processor is configured to:
   store non-detection region information that includes information on the non-detection region designated by a user for the image, and
   set the non-detection region in the image acquired by scanning the documents with reference to non-detection region information selected by the user in a case of scanning the documents from the stored non-detection region information.
(((5))) The information processing system according to (((4))),
   wherein the non-detection region information includes the information on the non-detection region designated by the user for an image of a predetermined paper size.
(((6))) The information processing system according to (((4))),
   wherein the non-detection region information includes the information on the non-detection region designated by the user for the image acquired by scanning the documents in advance.
(((7))) A program causing a computer to execute:
   determining that, in a case where an overlap of documents is detected in a non-detection region that is set in advance as a region where the overlap of the documents is not detected in an image acquired by scanning the documents, the overlap of the documents does not occur for the image.

The effects of the configuration of the supplementary notes will be described below.

According to the information processing system of (((1))), in the information processing system that detects the overlap of the documents during scanning, it is possible to scan the normal document in which the plurality of documents are overlapped.

According to the information processing system of (((2))), scanning can be performed as a normal document even in a case where the document extends beyond the non-detection region.

According to the information processing system of (((3))), even in a case where the document extends beyond the non-detection region, scanning can be performed as the normal document in a case of the document that goes out in the sub-scanning direction that is more likely to be a normal document than the document that goes out in another direction.

According to the information processing system of (((4))), the user can set the non-detection region with respect to the image acquired by scanning the document.

According to the information processing system of (((5))), it is possible to simplify the setting of the non-detection region, as compared with a case where the non-detection region is set for each document prepared by the user.

According to the information processing system of (((6))), it is possible to set the non-detection region appropriate for the document prepared by the user.

According to the program of (((7))), in the information processing system that detects the overlap of the documents during scanning, it is possible to scan the normal document in which the plurality of documents are overlapped.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming apparatus
11: control unit
11a: processor
11b: memory
11c: storage unit
12: communication interface
13: user interface device
14: print engine
15: scanner
16: overlap detection sensor
17: control bus

## Claims

1. An information processing system comprising:
a processor configured to:
determine that, in a case where an overlap of documents is detected in a non-detection region that is set in advance as a region where the overlap of the documents is not detected in an image acquired by scanning the documents, the overlap of the documents does not occur for the image.

2. The information processing system according to claim 1, wherein the processor is configured to:
determine that the overlap of the documents does not occur in a case where an overlap portion of the documents extends beyond the non-detection region in a same width in one direction.

3. The information processing system according to claim 2, wherein the processor is configured to:
determine that the overlap of the documents does not occur in a case where the overlap portion of the documents extends beyond the non-detection region in the same width in a sub-scanning direction of a scanning device.

4. The information processing system according to any one of claims 1 to 3, wherein the processor is configured to:
store non-detection region information that includes information on the non-detection region designated by a user for the image, and
set the non-detection region in the image acquired by scanning the documents with reference to non-detection region information selected by the user in a case of scanning the documents from the stored non-detection region information.

5. The information processing system according to claim 4,
wherein the non-detection region information includes the information on the non-detection region designated by the user for an image of a predetermined paper size.

6. The information processing system according to claim 4,
wherein the non-detection region information includes the information on the non-detection region designated by the user for the image acquired by scanning the documents in advance.

7. A program causing a computer to execute:
determining that, in a case where an overlap of documents is detected in a non-detection region that is set in advance as a region where the overlap of the documents is not detected in an image acquired by scanning the documents, the overlap of the documents does not occur for the image.

8. An information processing method comprising:
determining that, in a case where an overlap of documents is detected in a non-detection region that is set in advance as a region where the overlap of the documents is not detected in an image acquired by scanning the documents, the overlap of the documents does not occur for the image.

## Amended claims

### Amended claims in accordance with Rule 137(2) EPC.

**1.** An information processing system (10) comprising:
a processor (11a) configured to:
in a case where an overlap of documents is detected in a non-detection region that is set in advance as a region where the overlap of the documents is not detected in an image acquired by scanning the documents, ignore the overlap of the documents in the image,
the information processing system (10) being **characterized in that** the processor (11a) is further configured to:
ignore the overlap of the documents in a case where an overlap portion of the documents extends beyond the non-detection region in a same width in one direction, and determine that the overlap of the documents occurs in a case where the overlap portion of the documents extends beyond the non-detection region in different widths in the one direction.

**2.** The information processing system (10) according to claim 1, wherein the processor (11a) is configured to:
determine that the overlap of the documents does not occur in a case where the overlap portion of the documents extends beyond the non-detection region in the same width in a sub-scanning direction of a scanning device.

**3.** The information processing system (10) according to any one of claims 1 to 2, wherein the processor(11a) is configured to:
store non-detection region information that includes information on the non-detection region designated by a user for the image, and
set the non-detection region in the image acquired by scanning the documents with reference to non-detection region information selected by the user in a case of scanning the documents from the stored non-detection region information.

**4.** The information processing system (10) according to claim 3,
wherein the non-detection region information includes the information on the non-detection region designated by the user for an image of a predetermined paper size.

**5.** The information processing system (10) according to claim 3,
wherein the non-detection region information includes the information on the non-detection region designated by the user for the image acquired by scanning the documents in advance.

**6.** A program causing a computer to execute:
in a case where an overlap of documents is detected in a non-detection region that is set in advance as a region where the overlap of the documents is not detected in an image acquired by scanning the documents, ignoring the overlap of the documents inthe image,
the program being **characterized in that** the program cause the computer to execute:
ignoring the overlap of the documents in a case where an overlap portion of the documents extends beyond the non-detection region in a same width in one direction, and determine that the overlap of the documents occurs in a case where the overlap portion of the documents extends beyond the non-detection region in different widths in the one direction.

**7.** An information processing method comprising:
in a case where an overlap of documents is detected in a non-detection region that is set in advance as a region where the overlap of the documents is not detected in an image acquired by scanning the documents, ignoring the overlap of the documents in the image,
the information processing method being **characterized in that** further comprises:
ignoring the overlap of the documents in a case where an overlap portion of the documents extends beyond the non-detection region in a same width in one direction, and determine that the overlap of the documents occurs in a case where the overlap portion of the documents extends beyond the non-detection region in different widths in the one direction.

**1.** An information processing system (10) comprising:
a processor (11a) configured to:
in a case where an overlap of documents is detected in a non-detection region that is set in advance as a region where the overlap of the documents is not detected in an image acquired by scanning the documents, ignore the overlap of the documents in the image,
the information processing system (10) being **characterized in that** the processor (11a) is further configured to:
ignore the overlap of the documents in a case where an overlap portion of the documents extends beyond the non-detection region in a same width in a sub-scanning direction of a scanning device, and determine that the overlap of the documents occurs in a case where the overlap portion of the documents extends beyond the non-detection region in different widths in the sub-scanning direction of the scanning device.

**2.** The information processing system (10) according to claim 1, wherein the processor (11a) is configured to:
store non-detection region information that includes information on the non-detection region designated by a user for the image, and
set the non-detection region in the image acquired by scanning the documents with reference to non-detection region information selected by the user in a case of scanning the documents from the stored non-detection region information.

**3.** The information processing system (10) according to claim 2,
wherein the non-detection region information includes the information on the non-detection region designated by the user for an image of a predetermined paper size.

**4.** The information processing system (10) according to claim 2,
wherein the non-detection region information includes the information on the non-detection region designated by the user for the image acquired by scanning the documents in advance.

**5.** A program causing a computer to execute:
in a case where an overlap of documents is detected in a non-detection region that is set in advance as a region where the overlap of the documents is not detected in an image acquired by scanning the documents, ignoring the overlap of the documents inthe image,
the program being **characterized in that** the program cause the computer to execute:
ignoring the overlap of the documents in a case where an overlap portion of the documents extends beyond the non-detection region in a same width in a sub-scanning direction of a scanning device, and determine that the overlap of the documents occurs in a case where the overlap portion of the documents extends beyond the non-detection region in different widths in the sub-scanning direction of the scanning device.

**6.** An information processing method comprising:
in a case where an overlap of documents is detected in a non-detection region that is set in advance as a region where the overlap of the documents is not detected in an image acquired by scanning the documents, ignoring the overlap of the documents in the image,
the information processing method being **characterized in that** further comprises:
ignoring the overlap of the documents in a case where an overlap portion of the documents extends beyond the non-detection region in a same width in a sub-scanning direction of a scanning device, and determine that the overlap of the documents occurs in a case where the overlap portion of the documents extends beyond the non-detection region in different widths in the sub-scanning direction of the scanning device.
